(19) Europäisches Patentamt
European Patent Office
Office européen des brevets

(11) **EP 3 147 487 A1**

(12) **EUROPEAN PATENT APPLICATION**

(43) Date of publication:
**29.03.2017 Bulletin 2017/13**

(21) Application number: **16184295.0**

(22) Date of filing: **16.08.2016**

(51) Int Cl.:
*F02D 41/14* (2006.01)       *F02D 19/06* (2006.01)
*F02D 41/00* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **25.09.2015 JP 2015188334**

(71) Applicant: **Nikki Co., Ltd.**
**Kanagawa-ken 243-0801 (JP)**

(72) Inventors:
• **TAKIGAWA, Buso**
  **Kanagawa- ken, 243-0801 (JP)**
• **ABLA, Dilshat**
  **Kanagawa- ken, 243-0801 (JP)**
• **ZUNUN, Mamatjan**
  **Kanagawa- ken, 243-0801 (JP)**

(74) Representative: **Boult Wade Tennant**
**Verulam Gardens**
**70 Gray's Inn Road**
**London WC1X 8BT (GB)**

(54) **FUEL FLOW DETECTION METHOD OF IN-VEHICLE ENGINE**

(57)    A fuel flow detection method of an in-vehicle engine uses gasoline, liquefied gas, and gas as a fuel and adopts a spark ignition system, and a fuel flow is calculated from a detected intake air flow and an air-fuel ratio after combustion or an oxygen ratio.

AIR FLOW — $Qa$ →

AIR-FUEL RATIO — $R$ →

OXYGEN RATIO — $RO$ →

ENGINE ROTATION/ LOAD INFORMATION AND THE LIKE →

$$Qf = Qa / ( Kaf \times RO ) \times Ke$$

$Qf$: FUEL FLOW [kg/h]

$Qa$: AIR FLOW [kg/h]

$Kaf$: CONSTANT

$Ke$: CORRECTION COEFFICIENT BY EXPERIMENT

$Qa$: AIR FLOW [kg/h]

$Vsd$: VEHICLE SPEED [km/h]

$\times$
$\div$

$FE$: FUEL EFFICIENCY [kg/km]

**FIG.2**

EP 3 147 487 A1

**Description**

BACKGROUND

Technical Field

The present invention relates to a fuel flow detection method of an in-vehicle engine that uses gasoline, liquefied gas, and gas as a fuel and adopts a spark ignition system.

Related Art

A fuel flow of an in-vehicle engine is a measurement value important for showing performance of the engine, when a normal operation of the engine and fuel efficiency of the engine are required, for example.

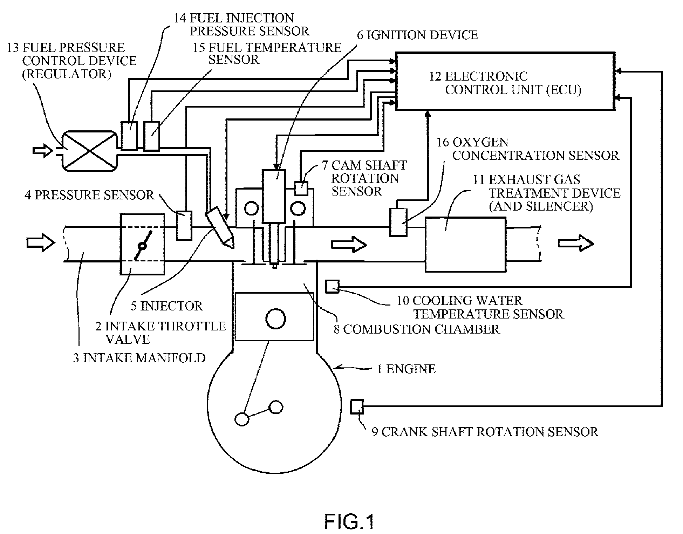

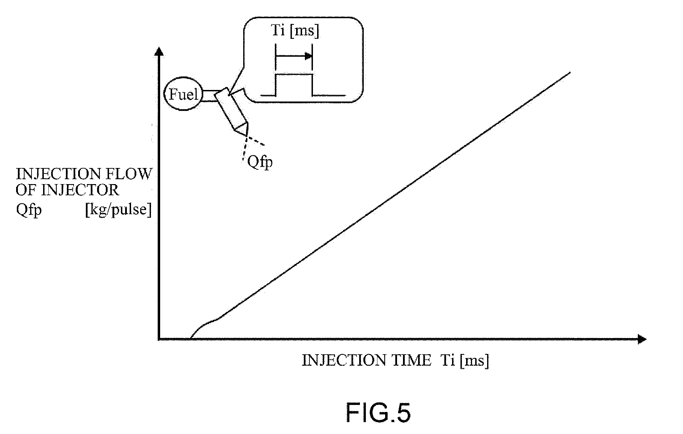

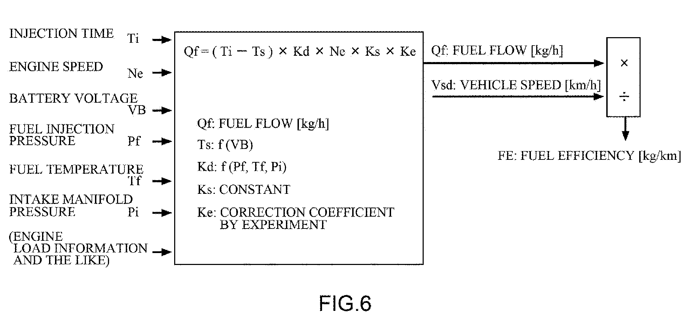

Conventionally, a system for detecting a fuel flow using that an injection time (Ti) of an injector and a fuel flow (Qfp) are correlated as illustrated in FIG. 5 is known as an actual measurement mechanism of the fuel flow. For example, in an embodiment of an electronically controlled fuel injection system using an LPG fuel illustrated in FIG. 1, a fuel flow (Qf) is calculated from a large amount of information such as information of an engine speed (Ne), information of a battery voltage (VB), information of a fuel injection pressure (Pf), information of a fuel temperature (Tf), and information of an intake manifold pressure (Pi), in addition to information of the injection time (Ti), as illustrated in FIG. 6.

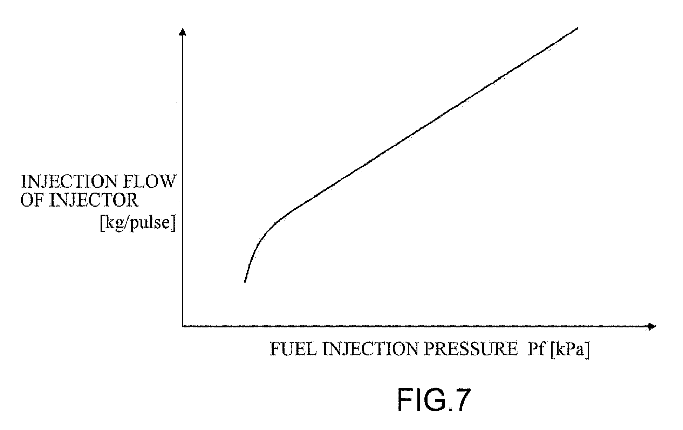

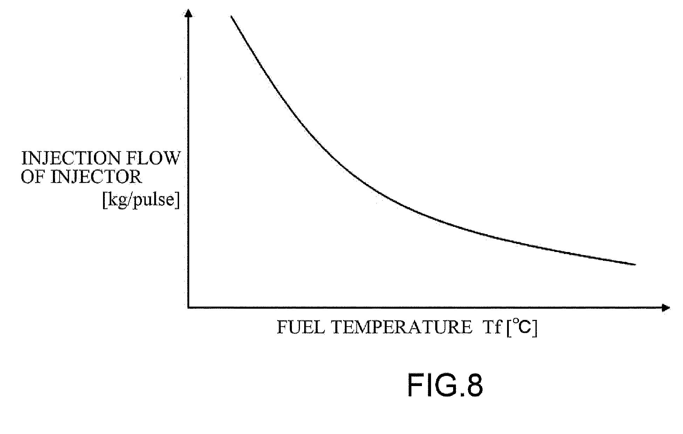

Therefore, in a fuel flow (Qf) calculation method according to the related art, because a fuel injection amount is affected by multiple factors, it is necessary to consider factors other than injection information. For example, it is necessary to perform correction by a correction coefficient (Kd) as illustrated in FIG. 6 to offset an injection flow of the injector tending to be increased by a fuel injection pressure as illustrated in FIG. 7 and an injection flow of the injector tending to be decreased by a fuel temperature as illustrated in FIG. 8. In addition, because the injector used for the electronically controlled fuel injection system is generally composed of a magnetic circuit, as illustrated in FIG. 5, there is a dead zone in a low pulse portion and a dead zone portion is affected by the battery voltage (VB). For this reason, to correct the above situation, it is necessary to perform correction (Ts) illustrated in FIG. 6. In addition, to correct a deviation of a calculation value and an actual measurement value of the fuel flow, it is necessary to perform correction by a two-dimensional interpolation map by the engine speed (Ne) and load information (for example, the intake manifold pressure).

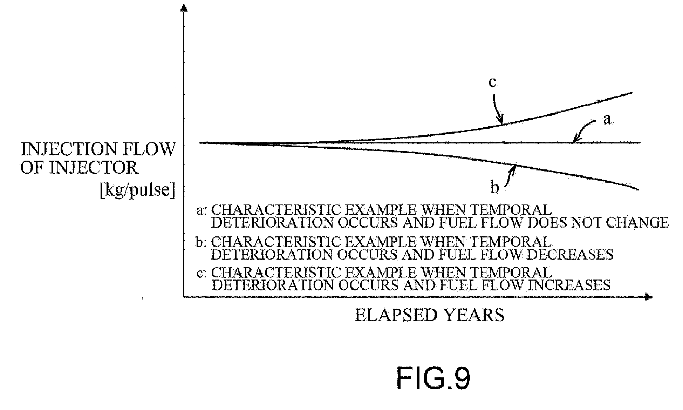

In addition, as illustrated in FIG. 9, because the injector is temporally deteriorated and the injection flow thereof changes, precision of the fuel flow changes and it is difficult to calculate an accurate fuel flow. Particularly, in the method according to the related art for calculating the fuel flow from the fuel injection time, the fuel flow and the fuel efficiency cannot be calculated in systems other than the fuel injection system on which the injector is mounted and the fuel flow and the fuel efficiency cannot be detected in a carburetor or gas mixer type fuel system.

Therefore, technology for calculating a fuel consumption amount (fuel flow) (Qf) and fuel efficiency (FE) from an intake air flow (Qa) and an excess air ratio (λ) of an engine is disclosed in JP 2000-328999 A.

However, in the technology disclosed in JP 2000-328999 A, directly detected values such as the air flow (Qa) and the excess air ratio (λ) detected from an excess air ratio sensor are used in input information and only a ratio of a theoretical air-fuel ratio and an actual air-fuel ratio can be known from excess air ratio sensor information. For this reason, when there is a change in fuel composition (for example, in the case of a gas engine using a liquefied petroleum gas fuel, a change in the theoretical air-fuel ratio due to a change in propane/butane ratio) changes, it is difficult to estimate an accurate air-fuel ratio from only information of the excess air ratio, which results in causing an error when the fuel flow is calculated.

SUMMARY

The present invention has been made to resolve the problems in the in-vehicle engine according to the related art and an object of the present invention is to provide a fuel flow detection method of an in-vehicle engine that can be applied to a spark ignition type engine adopting a carburetor or gas mixer type fuel system other than a fuel injection system on which an injector is mounted and can detect an accurate fuel flow even when a fuel composition changes, without using directly detected values such as an air flow and an excess air ratio detected from an excess air ratio sensor in input information.

The present invention made to resolve the above-described issue is a fuel flow detection method of an in-vehicle engine that uses gasoline, liquefied gas, and gas as a fuel and adopts a spark ignition system, wherein a fuel flow is calculated from a detected intake air flow (Qa) and an air-fuel ratio (R) after combustion or an oxygen ratio (RO).

In addition, an estimated intake air flow calculated from information of an intake manifold pressure sensor provided on a downstream side of a throttle valve of an engine, information of an air temperature sensor, and information of an engine speed or estimated intake air flow information calculated from information of a throttle valve opening, an atmospheric pressure, and an air temperature is used as the intake air flow.

In addition, the fuel flow is calculated using the following formula (1).

$$\text{Fuel flow(Qf)} = \frac{\text{Intake air flow (Qa)} \times \text{Constant (K)}}{\text{Oxgen ratio (air-fuel ratio index) (RO)}} \quad (1)$$

```
Fuel flow (Qf) = intake air flow (Qa) × constant (K)/oxygen
ratio (air-fuel ratio index) (RO)     (1)
```

Particularly, the fuel flow (Qf) is set to 0, when an engine stop or a fuel supply stop is controlled.

In addition, in the present invention, the fuel flow may be calculated by an electronic control unit (ECU) of the in-vehicle engine or the fuel flow may be detected by an electronic control unit (ECU) different from the electronic control unit (ECU) of the in-vehicle engine.

In addition, fuel efficiency may be calculated by dividing a value of the fuel flow calculated by the present invention by a vehicle speed.

In a fuel flow calculation method according to the related art using excess air ratio sensor information from which only a ratio of a theoretical air-fuel ratio and an actual air-fuel ratio is known, when there is a change in fuel composition (for example, in the case of a gas engine using a liquefied petroleum gas fuel, a change in the theoretical air-fuel ratio due to a change in propane/butane ratio), it is difficult to estimate an accurate air-fuel ratio, which results in causing an error when a fuel flow is calculated. However, according to the present invention, a fuel kind is determined from air-fuel ratio feedback control information or other information (generally, called fuel learning value information) and the theoretical air-fuel ratio is estimated. Therefore, more accurate air-fuel ratio information can be obtained and the present invention can be applied to a spark ignition type engine adopting a carburetor or gas mixer type fuel system other than a fuel injection system on which an injector is mounted. In addition, directly detected values such as an air flow and an excess air ratio detected from an excess air ratio sensor are not used in input information and an accurate fuel flow can be detected without causing an error, even when there is a change in fuel composition.

BRIEF DESCRIPTION OF DRAWINGS

FIG. 1 is a block circuit diagram of an electronically controlled fuel injection system of a preferable in-vehicle engine to carry out the related art and the present invention;

FIG. 2 is a diagram illustrating a fuel flow calculation method according to the present invention in the electronically controlled fuel injection system illustrated in FIG. 1;

FIG. 3 is a correlation diagram of an actual measurement fuel flow and a fuel flow calculation result according to the present invention in the electronically controlled fuel injection system illustrated in FIG. 1;

FIG. 4 is a relation diagram with various factors used for fuel flow/fuel efficiency calculation in the electronically controlled fuel injection system illustrated in FIG. 1;

FIG. 5 is a correlation diagram illustrating a principle of fuel flow detection according to the related art;

FIG. 6 is a diagram illustrating a fuel efficiency/fuel flow calculation method according to the related art;

FIG. 7 is a correlation diagram illustrating an influence of a fuel injection pressure on a fuel injection flow in the related art;

FIG. 8 is a correlation diagram illustrating an influence of a fuel temperature on the fuel injection flow in the related art; and

FIG. 9 is a correlation diagram illustrating an influence of temporal deterioration of an injector on the fuel injection flow in the related art.

DETAILED DESCRIPTION

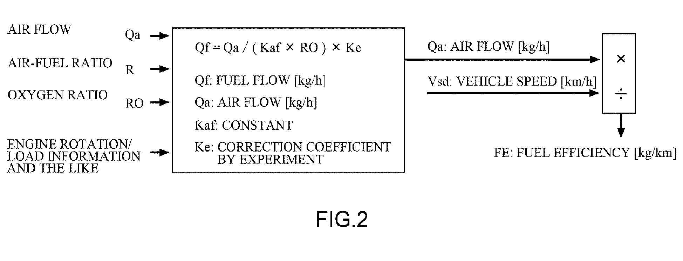

FIG. 1 illustrates an electronically controlled fuel injection system of a preferred in-vehicle engine 1 to carry out a fuel flow detection method of an in-vehicle engine to be the present invention. In the present invention, as illustrated in FIG. 2, a fuel flow (Qf) is calculated by "fuel flow (Qf) = air flow (Qa) /oxygen ratio (RO) × K", on the basis of information of an air flow (Qa) and an oxygen ratio (RO) to be input information.

Here, air flow information detected to control the engine is used as the air flow (Qa). Specifically, estimated air flow information calculated from an engine speed calculated from an intake manifold pressure sensor 4 and a crank shaft rotation sensor 9 disposed on a downstream side of an intake throttle valve 2 and an intake temperature detected by a fuel temperature sensor 15 or estimated air flow information calculated from a throttle opening of the intake throttle valve 2, the engine speed, the intake temperature, and an atmospheric pressure is used.

In addition, the oxygen ratio (RO) is information showing an air-fuel ratio in a current engine operation state and is operated and calculated from a detection signal of an oxygen concentration sensor 16 attached to an engine exhaust pipe. In addition, in a system to which only an $O_2$ sensor is attached, because only information of approximately a theoretical air-fuel ratio is known, information estimated as the theoretical air-fuel ratio may be executed when feedback control is executed.

When an excess air ratio is controlled to an enriched side and a lean side according to an operation situation, a sensor uses a value of the oxygen concentration sensor 16 at that time within a detection range of the sensor and handles control target air-fuel ratio in an ECU operation as estimated oxygen ratio information beyond the detection range of the sensor.

In the calculation formula of "fuel flow (Qf) = air flow (Qa) /oxygen ratio (RO) × K", "K" shows a conversion coefficient and is calculated as "K = Kaf × Ke".

Here, "Kaf" shows a theoretical air-fuel ratio and is determined according to a used fuel. For example, Kaf is 14.7 in the case of gasoline and Kaf is 16.8 in the case of natural gas. In addition, "Ke" shows a correction coefficient and is a coefficient to absorb a deviation of a fuel flow calculated by estimation and an actual measurement value. The correction coefficient "Ke" is configured using a two-dimensional interpolation map such as engine speed information from the crank shaft rotation sensor 9 and load information of the pressure sensor 4 disposed in an intake manifold 3 and is set by an actual machine adaptation experiment.

In addition, because the fuel does not flow in a situation where the engine is stopped or the fuel is cut, processing of "fuel flow (Qf) = 0" is executed.

For the fuel flow (Qf) calculated by each processing, fuel efficiency (FE [kg/km]) can be calculated by dividing the fuel flow (Qf) by a vehicle speed (Vsd) like the processing according to the related art.

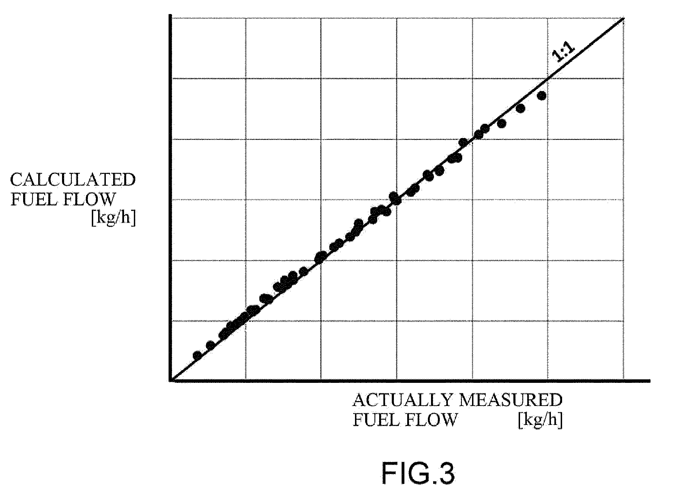

FIG. 3 is a correlation diagram of the fuel flow (Qf) calculated on the basis of the fuel flow detection method of the in-vehicle engine according to the embodiment of the present invention and an actual measurement fuel flow. As can be seen from FIG. 3, the calculated fuel flow and the actual measurement fuel flow are highly correlated and the fuel flow can be estimated with high precision. This result is a result calculated by the correction coefficient Ke = 1.0 as "correction absence". If correction is performed under each engine operation condition using the correction coefficient, precision can be further improved.

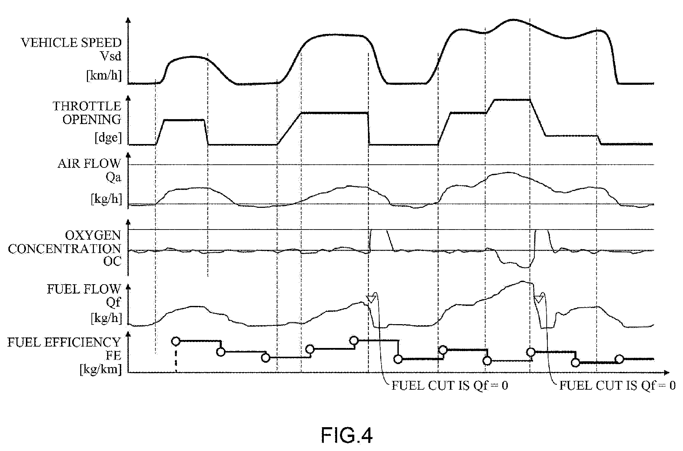

FIG. 4 is a relation diagram with various factors used for fuel flow/fuel efficiency calculation in the embodiment of the present invention using the electronically controlled fuel injection system of the in-vehicle engine 1 illustrated in FIG. 1. The intake air flow (Qa) is estimated by an intake manifold pressure detected by the pressure sensor 4 of the intake manifold 3 and an oxygen concentration (OC) is detected from the oxygen concentration sensor 16.

As the intake throttle valve 2 is opened and the engine 1 is accelerated, the air flow (Qa) increases, the oxygen concentration (OC) shows almost a constant value, and the fuel flow (Qf) estimated and calculated by the present invention shows almost the same change as a change in the air flow (Qa).

Then, the fuel flow (Qf) is changed almost equally to the air flow (Qa), by acceleration and deceleration. In addition, when the intake throttle valve 2 is returned to become a fuel cut state, the fuel flow (Qf) shows 0. Then, when rapid acceleration is performed and the air-fuel ratio is controlled to the enriched side, the fuel flow (Qf) also increases and the fuel flow (Qf) is detected in real time.

As described above, in the present invention, the fuel flow is calculated from the detected intake air flow (Qa) and the air-fuel ratio (R) after combustion or the oxygen ratio (RO), so that the fuel flow can be relatively easily calculated as compared with the method of calculating the fuel flow from the fuel injection time of the injector in the related art. In addition, disturbance and temporal deterioration of the injector can be prevented and the fuel flow and the fuel efficiency can be detected even in a system (for example, the gas mixer) not using the injector.

In addition, in the present invention, fuel efficiency information incorporated into an electronic control unit (ECU) program can be transmitted to an external device using a communication unit such as CAN. In addition, the fuel efficiency can be controlled by installing the fuel efficiency information on a vehicle by a device different from an electronic control unit (ECU) of the engine and displaying the fuel efficiency information on a body device or transmitting the fuel efficiency to the external device using the communication unit such as CAN.

In addition, in the present invention, an intake air flow meter, an oxygen concentration sensor to measure an excess air ratio during an exhaust, and a data collection/operation device are mounted on a vehicle including a vehicle speed sensor and an engine speed sensor. When the vehicle actually travels on a road surface, the vehicle speed (Vsd) and the engine speed obtained from the vehicle speed sensor and the engine speed sensor and outputs of the intake air flow meter and the oxygen concentration sensor are input to the data collection/operation device, a fuel consumption rate is calculated from the intake air flow and the oxygen ratio (RO) during the exhaust, a fuel consumption amount (fuel efficiency: FE) is calculated from the calculated fuel consumption rate and the vehicle speed, a fuel supply amount is calculated from the fuel consumption amount (fuel efficiency: FE) and the engine speed, an axial average effective pressure of the vehicle is calculated from a relation of the calculated fuel supply amount and the axial average effective pressure, and an engine output can be calculated using the calculated axial average effective pressure.

**Claims**

1. A fuel flow detection method of an in-vehicle engine that uses gasoline, liquefied gas, and gas as a fuel and adopts a spark ignition system,
   wherein a fuel flow is calculated from a detected intake air flow (Qa) and an air-fuel ratio (R) after combustion or an oxygen ratio (RO).

2. The fuel flow detection method of an in-vehicle engine according to claim 1, wherein an estimated intake air flow calculated from information of an intake manifold pressure sensor provided on a downstream side of a throttle valve of an engine, information of an air temperature sensor, and information of an engine speed or estimated intake air flow information calculated from information of a throttle valve opening, an atmospheric pressure, and an air temperature is used as the intake air flow.

3. The fuel flow detection method of an in-vehicle engine according to claim 1 or 2, wherein the fuel flow is calculated using the following formula (1):

$$\text{Fuel flow(Qf)} = \frac{\text{Intake air flow (Qa)} \times \text{Constant (K)}}{\text{Oxgen ratio (air-fuel ratio index) (RO)}} \quad (1)$$

```
Fuel flow (Qf) = intake air flow (Qa) × constant (K)/oxygen

ratio (air-fuel ratio index) (RO)    (1).
```

4. The fuel flow detection method of an in-vehicle engine according to claim 1, 2, or 3, wherein the fuel flow (Qf) is set to 0, when an engine stop or a fuel supply stop is controlled.

5. The fuel flow detection method of an in-vehicle engine according to claim 1, 2, 3, or 4, wherein the fuel flow is detected by a control unit different from a control unit of the in-vehicle engine.

6. The fuel flow detection method of an in-vehicle engine according to claim 1, 2, or 3, wherein fuel efficiency is calculated by dividing the fuel flow by a vehicle speed.

14 FUEL INJECTION PRESSURE SENSOR

13 FUEL PRESSURE CONTROL DEVICE (REGULATOR)

15 FUEL TEMPERATURE SENSOR

6 IGNITION DEVICE

12 ELECTRONIC CONTROL UNIT (ECU)

16 OXYGEN CONCENTRATION SENSOR

4 PRESSURE SENSOR

7 CAM SHAFT ROTATION SENSOR

11 EXHAUST GAS TREATMENT DEVICE (AND SILENCER)

5 INJECTOR

2 INTAKE THROTTLE VALVE

3 INTAKE MANIFOLD

10 COOLING WATER TEMPERATURE SENSOR

8 COMBUSTION CHAMBER

1 ENGINE

9 CRANK SHAFT ROTATION SENSOR

FIG.1

AIR FLOW Qa →

AIR-FUEL RATIO R →

OXYGEN RATIO RO →

ENGINE ROTATION/
LOAD INFORMATION →
AND THE LIKE

$Qf = Qa / (Kaf \times RO) \times Ke$

Qf: FUEL FLOW [kg/h]

Qa: AIR FLOW [kg/h]

Kaf: CONSTANT

Ke: CORRECTION COEFFICIENT
BY EXPERIMENT

Qa: AIR FLOW [kg/h] →

Vsd: VEHICLE SPEED [km/h] →

×

÷

FE: FUEL EFFICIENCY [kg/km]

## FIG.2

FIG.3

VEHICLE SPEED
Vsd
[km/h]

THROTTLE
OPENING
[dge]

AIR FLOW
Qa
[kg/h]

OXYGEN
CONCENTRATION
OC

FUEL FLOW
Qf
[kg/h]

FUEL EFFICIENCY
FE
[kg/km]

FUEL CUT IS Qf = 0          FUEL CUT IS Qf = 0

FIG.4

FIG.5

INJECTION TIME   Ti  →

ENGINE SPEED   Ne  →

BATTERY VOLTAGE   VB →

FUEL INJECTION
PRESSURE   Pf →

FUEL TEMPERATURE   Tf →

INTAKE MANIFOLD
PRESSURE   Pi →

(ENGINE
 LOAD INFORMATION →
 AND THE LIKE)

$Qf = ( Ti - Ts ) \times Kd \times Ne \times Ks \times Ke$

Qf: FUEL FLOW [kg/h]

Ts: f (VB)

Kd: f (Pf, Tf, Pi)

Ks: CONSTANT

Ke: CORRECTION COEFFICIENT
   BY EXPERIMENT

Qf: FUEL FLOW [kg/h] →

Vsd: VEHICLE SPEED [km/h] →

×
÷

FE: FUEL EFFICIENCY [kg/km]

## FIG.6

FIG.7

FIG.8

a: CHARACTERISTIC EXAMPLE WHEN TEMPORAL DETERIORATION OCCURS AND FUEL FLOW DOES NOT CHANGE
b: CHARACTERISTIC EXAMPLE WHEN TEMPORAL DETERIORATION OCCURS AND FUEL FLOW DECREASES
c: CHARACTERISTIC EXAMPLE WHEN TEMPORAL DETERIORATION OCCURS AND FUEL FLOW INCREASES

FIG.9

Europäisches
Patentamt

European
Patent Office

Office européen
des brevets

## EUROPEAN SEARCH REPORT

Application Number

EP 16 18 4295

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/036583 A1 (VESTRINI ANDREW [GB] ET AL) 11 February 2010 (2010-02-11) | 1-3,5 | INV.<br>F02D41/14 |
| Y | * abstract *<br>* paragraphs [0012] - [0015]; figure 2 * | 4,6 | F02D19/06<br>F02D41/00 |
| X | JP 2009 057871 A (MITSUBISHI HEAVY IND LTD) 19 March 2009 (2009-03-19)<br>* paragraphs [0001] - [0002] *<br>* paragraph [0014] *<br>* paragraphs [0048] - [0049]; figure 3 * | 1-3 | |
| Y | US 5 094 206 A (BUSLEPP KENNETH J [US] ET AL) 10 March 1992 (1992-03-10)<br>* column 3, lines 48-56 *<br>* column 6, line 64 - column 7, line 11 *<br>* figure 3 * | 4 | |
| A | JP H09 177592 A (UNISIA JECS CORP) 8 July 1997 (1997-07-08)<br>* paragraph [0003] * | 1-6 | |
| A | EP 0 026 643 A2 (FORD MOTOR CO [GB]; FORD WERKE AG [DE]; FORD FRANCE [FR]; FORD MOTOR C) 8 April 1981 (1981-04-08)<br>* figure 1 * | 1-6 | TECHNICAL FIELDS SEARCHED (IPC)<br><br>F02D |
| Y,D | JP 2000 328999 A (HORIBA LTD) 28 November 2000 (2000-11-28)<br>* figure 7 * | 6 | |

The present search report has been drawn up for all claims

| Place of search | Date of completion of the search | Examiner |
|---|---|---|
| The Hague | 8 February 2017 | Spicq, Alexandre |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## EP 3 147 487 A1

**ANNEX TO THE EUROPEAN SEARCH REPORT
ON EUROPEAN PATENT APPLICATION NO.**

EP 16 18 4295

08-02-2017

| Patent document cited in search report | | | Publication date | Patent family member(s) | | | Publication date |
|---|---|---|---|---|---|---|---|
| US 2010036583 | A1 | | 11-02-2010 | EP | 2310653 | A1 | 20-04-2011 |
| | | | | US | 2010036583 | A1 | 11-02-2010 |
| | | | | US | 2011218728 | A1 | 08-09-2011 |
| | | | | WO | 2010017097 | A1 | 11-02-2010 |
| JP 2009057871 | A | | 19-03-2009 | JP | 4755154 | B2 | 24-08-2011 |
| | | | | JP | 2009057871 | A | 19-03-2009 |
| | | | | US | 2009071438 | A1 | 19-03-2009 |
| US 5094206 | A | | 10-03-1992 | DE | 69200779 | D1 | 19-01-1995 |
| | | | | EP | 0501538 | A1 | 02-09-1992 |
| | | | | US | 5094206 | A | 10-03-1992 |
| JP H09177592 | A | | 08-07-1997 | NONE | | | |
| EP 0026643 | A2 | | 08-04-1981 | CA | 1154121 | A | 20-09-1983 |
| | | | | DE | 3070319 | D1 | 25-04-1985 |
| | | | | EP | 0026643 | A2 | 08-04-1981 |
| | | | | JP | S5647638 | A | 30-04-1981 |
| | | | | JP | S6248053 | B2 | 12-10-1987 |
| JP 2000328999 | A | | 28-11-2000 | JP | 3923216 | B2 | 30-05-2007 |
| | | | | JP | 2000328999 | A | 28-11-2000 |
| | | | | US | 6571616 | B1 | 03-06-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000328999 A